# EUROPEAN PATENT APPLICATION

(11) **EP 0 989 486 A1**
(43) Date of publication of application: **29.03.2000**
(21) Application number: 99201628.7
(22) Date of filing: 20.05.1999
(51) Int. Cl.: G06F 9/32, G06F 9/38

(54) **System and method for executing instructions in a pipelined processor**

(30) Priority: 15.09.1998 US 153368
(71) Applicant: Texas Instruments Incorporated, Dallas, Texas 75251 (US)
(72) Inventor: Subash, Chandar G., Tamil Nadu-64104 Coimbatore (IN); Mital, Deepak, 110-094 New Delhi (IN)
(74) Representative: Holt, Michael

(57) **Abstract**

A method processing a plurality of instructions in a processor having a pipeline is provided. Pipeline includes a first number of stages between a fetch stage and an execute stage. The method includes determining if a condition is met for a conditional call instruction. If the condition is met, the count of a counter is combined with a number associated with the first number of stages to produce an adjusted return address. The method also includes fetching the next instruction having an address designated by the adjusted return address after fetching and executing any instruction associated with the conditional call instruction.

## Description

### TECHNICAL FIELD OF THE INVENTION

This invention relates generally to processors and more particularly to a system and method for executing a plurality of instructions in a processor having a pipeline.

### BACKGROUND OF THE INVENTION

Many modern processors utilize a pipeline within the processor for greater efficiency. With the use of a pipeline, a task is divided into a number of sequential subtasks. The division of a task into sequential subtasks allows fetching, decoding, and execution of a number of program instructions at any given time. Therefore, at any particular time, several instructions may be processed in various stages of the pipeline. The use of a pipeline generally speeds execution time by insuring that the processor does not have to wait for instructions to become available for execution. This is true because when the processor completes execution of one instruction, the next is ready and waiting for execution.

Generally, a processor having a pipeline fetches an instruction stored in a memory location having the count of a program counter as an address, and it increments the counter by one so that the next instruction fetched is the instruction residing in the next sequential memory location. In a processor having a pipeline, a problem arises with conditional call instructions. In a conditional call instruction, a condition is checked and, if the condition is met, a series of instructions stored beginning at a designated address are executed. These instructions are accessed by adjusting the count of the counter to the designated address, fetching the current instruction, and incrementing the count of the program counter until all instructions associated with the conditional instruction are accessed. Examples of conditional call instructions include a subroutine call, trap, or interrupt. Upon return to normal processing from the subroutine, interrupt, or trap, the program counter is reset to correspond to the count that it had when the condition associated with the conditional instruction was met. This count is stored upon the meeting of the condition.

However, in a processor having a pipeline, the count of the program counter at the time a call is executed does not correspond to the address location of the instruction in the pipeline immediately following the conditional instruction. Therefore the count for the program counter that is returned upon returning to main processing is not the desired count for the program counter.

Prior systems have addressed this problem by the use of a plurality of delayed program counters that store previous counts of the program counter. However, the use of delayed program counters provide disadvantages. For example, the use of delayed program counters requires additional silicon area for the processor. As the number of stages of the pipeline in a processor increases, the number of delayed program counters also increases. Therefore, silicon space requirements of a processor utilizing delayed program counters increase with pipeline depth.

### SUMMARY OF THE INVENTION

Accordingly, a need has arisen for an improved apparatus for executing a plurality of instructions in a processor having a pipeline. The present invention provides a system and method for executing a plurality of instructions in a pipelined processor that addresses shortcomings of prior systems and methods.

According to one embodiment of the invention, a method of processing a plurality of instructions in a processor having a pipeline is provided. The pipeline has a first number of stages between a fetch stage and an execute stage. The method includes determining if a condition is met for a conditional call instruction, and if the condition is met: (i) combining the count of a counter with a number associated with the first number of stages to produce an adjusted return address; (ii) fetching and executing any instruction associated with the conditional call instruction; and (iii) fetching a next instruction having an address designated by the adjusted return address after fetching and executing any instruction associated with the conditional call instruction.

According to another embodiment of the invention, a processor includes a plurality of sequential stages including a fetch stage and an execute stage. The sequential stages also include a first number of stages between the fetch stage and the execute stage. The processor also includes a program counter operable to provide an address of a memory location storing a desired instruction for fetching by the fetch stage and an arithmetic element. The arithmetic element is operable to receive a count of the program counter and also receive the first number of stages between the fetch stage and the execute stage. The arithmetic element is also operable to combine the first number of stages between the fetch stage and the execute stage with the count of the program counter to produce an adjusted count for receipt by the program counter.

Embodiments of the invention provide numerous technical advantages. For example, in one embodiment of the invention, a single program counter is used to designate the address location of the next instruction following a call. The use of a single program counter reduces memory requirements associated with reducing address locations, and therefore allows the use of such memory locations in other areas of the processor. The elimination of multiple program counters is particularly advantageous in processors that address large amounts of memories. For example processors that address an amount of memory locations that require a 32 bit address would suffer greater internal memory requirements. Therefore, the invention reduces the silicon area required for a resulting processor by reducing the number of registers required for accurately addressing a next instruction upon return from a call and, by reducing pipeline management complexity, further reduces the silicon area as well as reducing test time.

Other technical advantages are readily apparent to one skilled in the art from the following figures, descriptions, and claims.

### BRIEF DESCRIPTION OF THE DRAWINGS

For a more complete understanding of the present invention and the advantages thereof, reference is now made to the following descriptions taken in connection with the accompanying drawings in which:
FIGURE 1A is a block diagram of a computer system according to the teachings of the present invention;
FIGURE 1B is a timing diagram illustrating the progression of instructions through a pipeline of the computer system of FIGURE 1A;
FIGURE 2 is a block diagram of a portion of the computer system of FIGURE 1, showing additional details of a fetch unit in a processor of FIGURE 1; and
FIGURE 3 is a timing diagram showing the location of various instructions within a pipeline of a processor of the computer system in FIGURE 1.

### DETAILED DESCRIPTION OF THE INVENTION

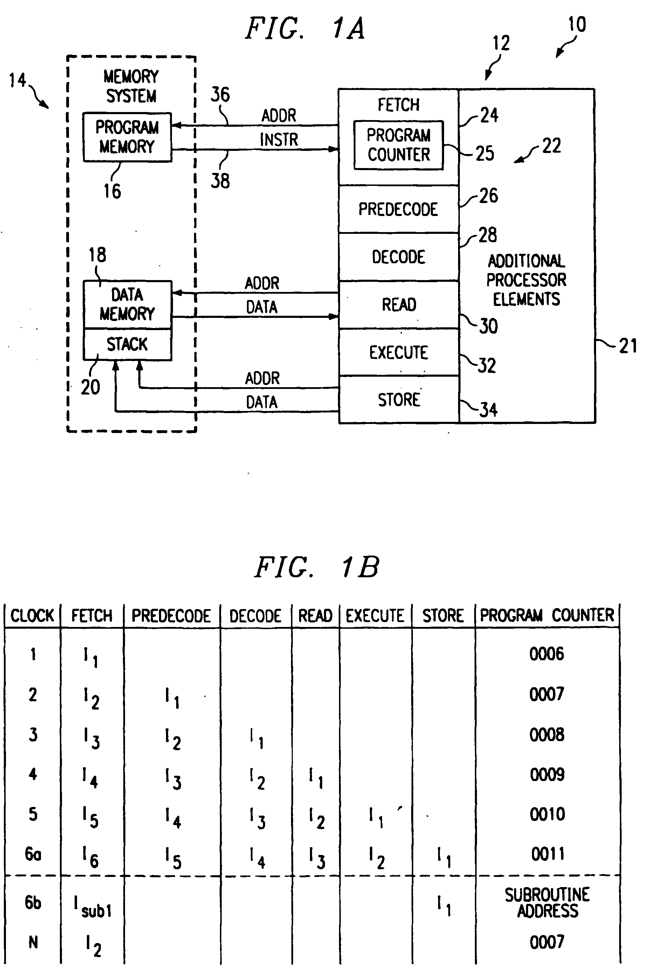

Embodiments of the present invention and its advantages are best understood by referring to FIGURES 1 through 3 of the drawings, like numerals being used for like and corresponding parts of the various drawings.

FIGURE 1A is a block diagram of a computer system 10 according to the teachings of the present invention. Computer system 10 includes a processor 12 that is operable to access a memory system 14. Memory system 14 may include both program memory 16 and data memory 18. Data memory 18 may also include a stack 20.

Processor 12 includes a pipeline 22 having a plurality of pipeline stages. A pipeline stage may perform a subtask associated with obtaining, decoding, executing, or otherwise associated with an instruction stored in program memory 16. In the embodiment illustrated in FIGURE 1A, pipeline 22 includes a fetch stage 24, a predecode stage 26, a decode stage 28, a read stage 30, an execute stage 32, and a store stage 34. Processor 12 may also include additional processor elements 21.

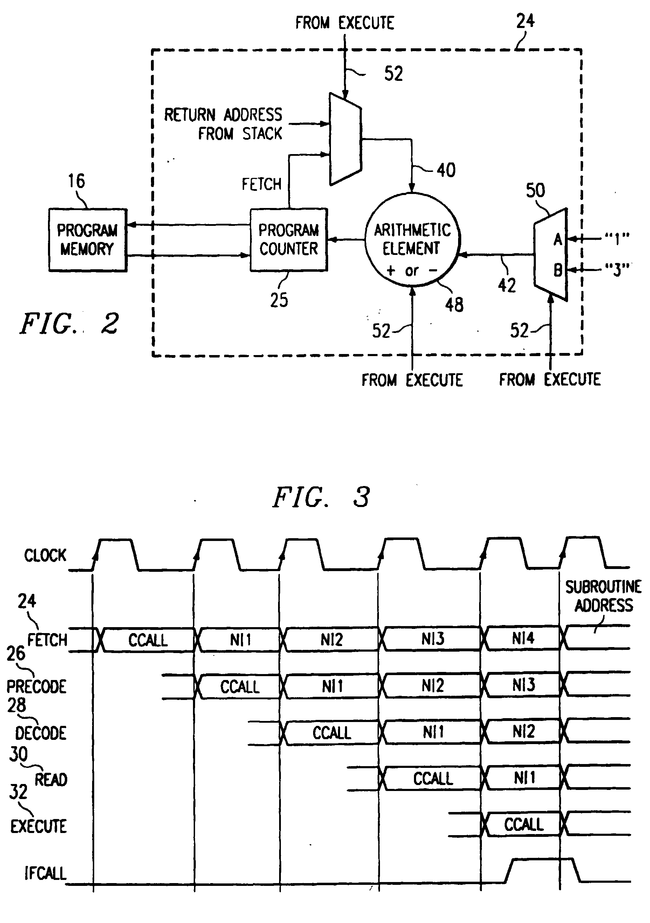

Fetch stage 24 obtains an instruction from a memory location in program memory 16. Fetch stage 24 issues a memory address to program memory 16, and an instruction stored in the location in program memory 16 that corresponds to that address is provided to fetch stage 24. The providing of an address by fetch stage 24 to program memory 16 is illustrated by an arrow 36. Providing an instruction to fetch unit 24 from program memory 16 is illustrated by a reference numeral 38. Fetch stage 24 may include a program counter 25 that generates an address corresponding to an instruction stored in program memory 16. Fetch stage 24 may be replaced with more than one pipeline stage. For example, fetch stage 24 may be replaced with a separate stage that performs the function of computing an address of the memory location in program memory 16 from which to read an instruction and a separate stage that performs the function of reading the instruction from the specified address. However, as used hereinafter, "fetch stage" refers to the stage in a pipeline that actually calculates an address from which an instruction is to be obtained. In some modern processors this stage is termed a "prefetch" stage. Other suitable examples of fetch stage 24 may also be incorporated with the teachings of the present invention. Additional details of fetch stage 24 are described in greater detail in conjunction with FIGURE 2.

Predecode stage 26 performs operations associated with preparing decode stage 28 to decode an instruction. Read stage 30 reads from data memory 18 any data necessary for execution of the instruction decoded by decode stage 28. Each of the stages in pipeline 22 may be further subdivided into a number of stages. For example, read stage 30 may be replaced by a separate stage that performs a computation necessary to determine from which location in data memory 18 data will be read and a separate stage that performs the function of reading such data. Execute stage 32 performs the function of executing instruction 38. Although execute stage 32 may be divided into a plurality of stages, as used hereinafter, "execute stage" refers to a stage in a pipeline that performs at least the function of determining if a condition associated with a conditional call is met. Store stage 34 performs the function of writing any data that may be required to be written as a result of the execution of instruction 38.

According to one embodiment of the invention, fetch unit 24 calculates an address designating a memory location in program memory 16 from which to receive a next instruction upon completing execution of instructions associated with a conditional call instruction. This calculation is performed in a manner that reduces silicon area requirements for processor 12, as described in greater detail below.

FIGURE 1B illustrates progression of instructions through pipeline 22 for one example of the operation of processor 12. At a first clock cycle, an instruction I₁ is fetched by fetch stage 24. Instruction I₁ is obtained from a memory location having an address designated by program counter 25. In this example, instruction I₁ is obtained from memory location 0006. At a next clock cycle, clock cycle 2, instruction I₁ advances to predecode stage 26 and a second instruction I₂ is fetched by fetch stage 24 from program memory 16. Program counter 25 provides the location from which to fetch the next instruction I₂. In this example, program counter 25 is incremented by one for each sequential fetch. Therefore during clock cycle 2, the program counter has a count of 0007. During a next clock cycle, instruction I₁ advances to decode stage 28, instruction I₂ advances to predecode stage 26, and a third instruction I₃ is fetched from a memory location in program memory 16 having an address of 0008.

During a fourth clock cycle, instruction I₁ advances to read stage 30, instruction I₂ advances to decode stage 28, instruction I₃ advances to predecode stage 26, and a next instruction I₄ is fetched from a memory location in program memory 16 having an address of 0009. During a fifth clock cycle, instruction I₁ advances to execute stage 32, instruction I₂ advances to read stage 30, instruction I₃ advances to decode stage 28, instruction I₄ advances to predecode stage 26, and a next instruction I₅ is fetched from a memory location in program memory 16 having an address of 0010.

In the case in which instruction I₁ is a conditional call instruction, during a sixth clock cycle two possible alternatives exist. In the first case, denoted by clock cycle 6a, execution of instruction I₁ determines that the condition associated with the conditional call instruction is not met. In such a case, instruction I₁ advances to store stage 34, instruction I₂ advances to execute stage 32, instruction I₃ advances to read stage 30, instruction I₄ advances to decode stage 28, instruction I₅ advances to predecode stage 26, and a sixth instruction I₆ is fetched from a location in program memory 16 having an address of 0011.

Alternatively, as denoted by clock cycle 6b, if the condition associated with conditional call instruction I₁ is met, instruction I₁ advances to store stage 34 and instructions I₂ through I₅ are discarded. A next instruction is fetched from a location in program memory 16 corresponding to a subroutine address associated with the conditional call instruction I₁. Thus program counter 25 is adjusted to correspond to the subroutine address of the next instruction to be fetched that corresponds to the conditional call instruction.

Before adjusting the count of program counter 25, the count of the program counter 25, which in this example is 0011, is stored to stack 20 in data memory 18. The stored value of program counter 25 is a return address for use in resuming main processing upon return from executing instructions associated with the conditional call instruction.

Upon return from executing the instructions associated with the conditional call instruction, designated by clock cycle N, a fetch instruction is issued to obtain the instruction that immediately preceded the conditional call instruction I₁, which in this example is instruction I₂. Therefore, the count of program counter 25 is required to be adjusted to a value of 0007. However, the return address stored in stack 20 is 0010. The correct value for program counter at 0007 may be obtained by subtracting the number of stages between fetch stage 24 and execute stage 32 from the return address stored in stack 20. In this example pipeline 22 includes three stages between fetch stage 24 and execute stage 32: predecode stage 26, decode stage 28, and read stage 30. Thus the correct count for program counter 25 may be obtained by subtracting three from the value stored in stack 20 upon the meeting of the condition associated with instruction I₁. Subtracting the number of stages between fetch stage 24 and execute stage 32 from the value stored in program counter 25 provides a correct return address for program counter 25 upon completion of executing instructions associated with a conditional call instruction without requiring any delayed program counters. In embodiments in which fetch stage 24 or execute stage 32 is divided into more than one stage, subtracting the number of stages between a stage that calculates an address from which an instruction is read and a stage that determines if a condition associated with a conditional call instruction is met from the value stored in program counter 25 provides the correct return address. Elimination of delayed program counters reduces the required silicon area for processor 12. An example implementation of the above-described method is described in conjunction with FIGURE 2 below.

FIGURE 2 is a block diagram of a portion of computer system 10, showing additional details of fetch stage 24. In order to provide a correct address for obtaining additional instructions after executing instructions associated with the conditional call instruction, an arithmetic unit or element 48 is provided. Arithmetic element 48 receives two input signals. A first input signal 40 is indicative of the count of program 25. A second input signal 42 is indicative of either (i) the number of stages between execute stage 32 and fetch stage 24 for a given processor, which in this example is 3, or (ii) one. In addition, arithmetic element 48 receives a control signal 52 from execute stage 32. Control signal 52 selects whether arithmetic element 48 performs an addition or subtraction operation, as described in greater detail below. Upon returning to normal processing after executing instructions associated with a conditional call instruction, the number of stages between execute stage 32 and fetch stage 24 is provided to arithmetic element 48. However, if a condition associated with a conditional call instruction is not met and a return is not made, a one is provided to arithmetic element 48.

In one embodiment of the invention, the determination of whether to provide the number of stages between execute stage 32 and fetch stage 24 to arithmetic element 48 or a zero to arithmetic element 48 is made by a multiplexer 50 in conjunction with control signal 52 received from execute stage 32. Control signal 52 selects the number of stages between execute stage 32 and fetch stage 24 if a return is being made from executing instructions associated with a conditional call instruction and selects one if a return is not being made from a conditional call instruction. In addition, control signal 52 selects the subtraction operator for arithmetic element 48 if a return is being made from executing a conditional call instruction and the addition operator for arithmetic element 48 if a return is not being made from executing a conditional call instruction. In the present embodiment, arithmetic element 48 subtracts the value of signal 42 from signal 40, which represents the current count of program counter 25, to produce an adjusted return address for providing to program memory 16 in order to obtain the next instruction sequentially following the conditional call instruction. In this example, the next instruction sequentially following the conditional call instruction is instruction I₂. If a return is not made from executing a conditional call instruction, arithmetic element 48 adds one to the value of signal 40.

Thus, the present invention provides a method and system for returning from executing instructions associated with a conditional call instruction and continuing main processing at the point from which main processing was discontinued. Combining the return address with the number associated with the number of stages between fetch stage 24 and execute stage 32 allows return to the proper address location in program memory 16. The above-described process alleviates any need for delayed program counters that would otherwise be needed to store previous counts of program counter 25 to properly return to the correct instruction upon return from a conditional call instruction. Because delayed program counters are not required, the silicon area required for processor 12 may be reduced. The silicon area savings are particularly advantageous in processors utilizing large address spaces because delayed program counters would otherwise be required to store large address locations, such as 32 bit address locations, which require additional silicon area.

FIGURE 3 is a timing diagram showing the location of various instructions within a pipeline of processor 12. An example operation of processor 12 is described in conjunction with FIGURE 3, and in particular the execution of a conditional call instruction is described. As illustrated in FIGURE 3, over a period of five clock cycles five instructions are sequentially fetched. These instructions include a conditional call instruction and four following instructions, "NI₁," "NI₂," "NI₃," and "NI₄." The conditional call instruction advances through pipeline 22 and reaches execute stage 32 during the fifth clock cycle. A check is performed at execute stage 32 and a determination is made that a condition associated with the conditional call instruction is met. The meeting of the condition associated with the conditional call instruction is represented by a transition from a low value to a high value of a variable "ifcall," illustrated in FIGURE 3. Upon determining that the condition associated with the conditional call instruction is met, the current count of program counter 25 is stored as a return address, and program counter 25 is adjusted to hold a value of a subroutine address corresponding to the first address location storing instructions associated with the conditional call. An example location for storing the return address is stack 20. After completing execution of all instructions associated with a subroutine called by the conditional call instruction, a return instruction (not explicitly shown) is received by execute stage 32. Upon reception of a return instruction, program counter 25 is set to the value held by the return address and is adjusted by arithmetic element 48 to have a value corresponding to the return address minus the number of stages between execute stage 32 and fetch stage 24. Thus upon return from the processing of the subroutine, the next instruction, NI₁, is executed.

By adjusting the return address based on the number of stages between execute stage 32 and fetch stage 24, the use of delayed program counters may be avoided. Avoiding the use of delayed program counters reduces silicon area requirements for processor 12, which is desirable.

Although the present invention and its advantages have been described in detail, it should be understood the various changes, substitutions, and alterations can be made therein without departing from the spirit and scope of the present invention as defined by the appended claims.

## Claims

1. A method of processing a plurality of instructions in a processor having a pipeline, the pipeline having a first number of stages between a fetch stage and an execute stage, the method comprising the steps of:
determining if a condition is met for a conditional call instruction and if the condition is met:
combining a count of a counter and a number associated with the first number of stages to produce an adjusted return address;
fetching and executing any instruction associated with the conditional call instruction; and
after fetching and executing any instruction associated with the conditional call instruction, fetching a next instruction having an address designated by the adjusted return address.

2. The method of Claim 1, wherein the step of combining a count of a counter and a number associated with the first number of stages comprises combining the count of a counter and the first number of stages.

3. The method of Claim 1, wherein the step of combining a count of a counter and a number associated with the first number of stages to produce an adjusted return address further comprises subtracting a first number of stages from the count of a counter to produce the adjusted return address.

4. The method of Claim 1, and further comprising fetching the conditional call instruction from a memory location having a first address, and wherein the adjusted return address is equal to the first address plus one.

5. The method of Claim 1, wherein the step of combining the return address and a number associated with the first number of stages to produce an adjusted return address comprises the steps of:
receiving at an arithmetic unit the return address and the first number of stages; and
subtracting the first number of stages from the return address to produce the adjusted return address.

6. The method of Claim 1, wherein the step of combining a count of a counter and a number associated with the first number of stages to produce an adjusted return address comprises storing a count of the counter as a return address before executing any instruction associated with the conditional call instruction and combining a number associated with the first number of stages with the return address after fetching and executing any instruction associated with the first number of stages to produce an adjusted return address.

7. The method of Claim 1, wherein the step of combining a count of a counter and a number associated with the first number of stages to produce an adjusted return address comprises combining a count of a counter and a number associated with the first number of stages to produce an adjusted return address before executing any instruction associated with the conditional call instruction.

8. The method of Claim 1, wherein the step of determining if a condition is met for a conditional call comprises determining if a condition is met for an interrupt.

9. A processor comprising:
a plurality of sequential stages, the plurality of sequential stages including a fetch stage, an execute stage, and a first number of stages between a portion of the fetch stage and the execute stage;
a program counter operable to provide an address of a memory location storing a desired instruction for fetching by the fetch stage; and
an arithmetic element operable to:
receive a count of the program counter and the first number of stages between the fetch stage and the execute stage; and
combine the first number of stages between the fetch stage and the execute stage with the count of the program counter to produce an adjusted count for receipt by the program counter.

10. The processor of Claim 9, and further comprising a logical unit operable to;
receive the first number of stages between the fetch stage and the execute stage;
receive a signal indicating that processing of a conditional call has completed; and
provide the first number of stages between the fetch stage and the execute stage to the arithmetic unit in response to receiving the signal indicating that processing of a conditional call has completed.

11. The processor of Claim 9, wherein the plurality of sequential stages comprises a predecode stage, a decode stage, and a read stage.

12. The processor of Claim 9, wherein the logical unit comprises a multiplexer.

13. The processor of Claim 9, wherein the fetch stage comprises a first stage operable to compute an address of an instruction and a second stage operable to read the instruction and wherein the portion of the fetch stage is the first stage.
